# EUROPEAN PATENT SPECIFICATION

(11) **EP 2 758 345 B1**
(45) Date of publication and mention of the grant of the patent: **09.11.2016**
(21) Application number: 12769753.0
(22) Date of filing: 19.09.2012
(51) Int. Cl.: C02F 1/36, C02F 11/12, B01D 21/28

(54) **ULTRASONIC SEPARATOR FOR SEPARATING PARTICLES FROM A LIQUID AND METHOD FOR SEPARATING PARTICLES WITH THIS DEVICE**
ULTRASCHALLABSCHEIDER ZUM TRENNEN VON PARTIKELN AUS EINER FLÜSSIGKEIT UND VERFAHREN ZUR TEILCHENABSCHEIDUNG MIT DIESER VORRICHTUNG
SÉPARATEUR À ULTRASONS POUVANT SÉPARER DES PARTICULES D'UN LIQUIDE ET PROCÉDÉ DE SÉPARATION DE PARTICULES AVEC CET APPAREIL

(30) Priority: 19.09.2011 NL 1039052
(43) Date of publication of application: 30.07.2014
(73) Proprietor: Stichting Wetsus Centre of Excellence for Sustainable Water Technology, 8934 CJ Leeuwarden (NL)
(72) Inventor: CAPPON, Hendrik Jannes, NL-4421 TK Kapelle (NL); KEESMAN, Karel Jacob, NL-6721 TG Bennekom (NL); MAYER, Mateo Jozef Jaques, NL-3811 BJ Amersfoort (NL)
(74) Representative: Verdijck, Gerardus
(86) International application number: PCT/NL2012/050659
(87) International publication number: WO 2013/043046

(56) References cited:
- WO-A1-89/03243
- WO-A1-2005/110929
- US-A- 5 688 406
- US-A1- 2010 078 384
- US-A1- 2010 155 327
- US-B1- 6 216 538
- US-B2- 7 846 382

## Description

The present invention relates to an ultrasonic separator for separating particles from a liquid. For example, the liquid relates to waste water, while the particles relate to the sludge therein, with sludge particles being separated by the ultrasonic separator.

US 6 216 538 discloses an ultrasonic manipulation apparatus to fix, move and transport a particle.

Other examples of apparatuses suitable for the ultrasonic separation of particles from a fluid are given by the documents US 2010/0078384 A1, US 5 688 406 and WO89/03243.

Conventional separators in waste water treatment require the use of a relatively large settler. In addition, the sludge concentration has to be relatively low to enable a more or less efficient operation.

An alternative conventional approach in waste water treatment is the use of a membrane bioreactor wherein waste water is purified by the use of activated sludge. The purified water is removed from the membrane bioreactor by the use of microfiltration membranes. The membranes retain most sludge and bacteria in the reactor system. This enables the treatment of liquid with a higher sludge concentration. Also, it is not required to apply a large settler in waste water treatment. Problems with the membrane bioreactor in practice are the relatively high investment and maintenance costs, especially for the membranes. In addition, a further problem is the susceptibility of the membranes for fouling that may result in a trans-membrane pressure drop and an associated energy cost that is relatively high.

The present invention has for its object to provide an ultrasonic separator for separating particles from a liquid, such as sludge from waste water, that obviates or at least reduces the above problems.

This object is achieved with the ultrasonic separator for separating particles from a liquid according to claim 10.

The liquid channel of the separator may relate to a tube, pipe, conduit or reactor provided with an inlet and an outlet for receiving the liquid. In a presently preferred embodiment, the liquid relates to waste water and the separator is used to separate sludge particles from the waste water. The dimensions and/or specific configuration of the process including the channel can be designed upon characteristics of the entire process, including desired throughput, and liquid and particle characteristics. The liquid channel can be a cylindrical or rectangular channel with a liquid inlet and a liquid outlet. Other shapes for the channel would also be possible according to the invention.

By generating one or more interfering acoustic waves with one or more transducers it is possible to achieve a three-dimensional structure of nodes and/or node regions. The nodes attract the particles that are present in the liquid. For example, this structure of nodes attracts the sludge particles by increasing the apparent diffusion coefficient for the particles. As a result thereof, the concentration of these particles in this structure starts to increase. Preferably, the structure comprises substantially parallel node lines. In use, the (sludge) particles are captured in or at the node lines, i.e. channels rich on particles, with the liquid/water substantially flowing between the node lines, i.e. channels poor on particles.

As a further effect the residence times, and in fact the residence time distributions, of the liquid itself and the particles, such as the sludge particles, start to differ. More specifically, the residence time difference is such that the particles to be measured and/or sampled remain for a significant longer period of time in the channel. This increases the possibilities for concentrating, measuring and sampling, for example.

The structure of nodes is the result of the transducers being capable of producing acoustic waves that interfere with each other. Therefore, at least one transducer needs to be provided. In case one transducer is provided at last one additional reflector is required to produce some nodes and/or node regions. Preferably, more than on set of transducers or combination set of a transducer and a reflector is provided to achieve a three-dimensional structure of nodes and node regions. Depending on the characteristics of the waves, the equipment and the particles, the particles can be "captured" in the nodes.

By capturing the particles they are separated from the liquid. The captured particles can be collected by periodically switching off the transducers and allow the particles to settle and/or return to the supply, for example a bioreactor. Alternatively, or in combination therewith, particles will settle in case they become too large or heavy to be kept in the node. Depending on flow characteristics the large of heavy particles will settle. In an alternative approach the separating structure with nodes is periodically switched off and flushed, and the output during flushing is directed into a desired direction.

The transducers and/or reflectors are preferably provided at the side walls of the channel, or alternatively in side channels of the liquid channel. The frequency produced by the transducers in a presently preferred embodiment is in the range of 20 kHz-100 MHz, more preferably in the range of 1-10 MHz, and most preferably about 2 MHz. Preferably, a λ/2 or λ/4 resonator is applied to achieve the desired particle separation.

A further effect of the acoustic/ultrasonic separator is that due to the acoustic waves in the solution or liquid the apparent diffusion coefficient of the molecules in the liquid is significantly increased. This improves the transfer of particles towards the nodes and node lines. Furthermore, also the transport of reactants, such as nutrients for micro-organisms, and reaction products will be improved, increasing for example the rate of flow of reactants and reaction products to and from the nodes. Also, due to the use of acoustic waves fouling of the channel is prevented or at least minimised. This prevents or reduces cleaning requirements for the device according to the invention. In fact, cleaning the acoustic achieved separating structure of nodes only requires switching on and off the transducers.

Preferably, a controller is provided for controlling the one or more transducers. The controller performs the switching on and off of the transducers. Preferably, the controller also sets the parameters for the transducers including the frequencies and/of amplitudes of the waves. This opens op possibilities for capturing particles of different sizes at different nodes in the particles separating structure such that these different particles can be separated at the same time and/or with the same device. This improves the overall flexibility of the ultrasonic separator for dealing with changes in the liquid, such as waste water.

Also, the device according to the present invention can be implemented relatively easy online in an existing process. Also, the liquid flow is only affected in a minimal way by the acoustic waves without increasing flow resistance, for example. This prevents or reduces destruction of fragile particles and/or aggregates. In addition, the invention can be applied in a continuous and/or semi-continuous and/or batch process, periodically or continuously.

The separator according to the invention has the advantage that relatively highly concentrated activated sludge can be treated. In addition, a large settler is not required to separate activated sludge from the waste water.

Furthermore, there is no membrane fouling and no energy losses because of a pressure drop over the membranes as no physical membranes or other physical components are used in the separator according to the invention.

In a presently preferred embodiment the ultrasonic separator according to the invention is applied to waste water treatment to separate activated sludge and bacteria from waste water. The activated sludge is immobilised and concentrated in node lines and/or node regions that are achieved by the interference of acoustic waves generated by the transducers.

According to the present invention one or more sets of transducers or combination sets of a transducer and a reflector are placed at an angle to the longitudinal direction of the liquid channel.

By placing some or all of the transducers at an angle to the longitudinal direction of the liquid channel the node lines of the separating structure are also provided at an angle to this longitudinal direction. This has the advantage that the incoming liquid is, at least somewhere in the three-dimensional separating structure, very close to a node line. This improves the "capturing" of the particles in the node lines. In fact, the liquid passes through the node lines and/or slightly bends to follow a flow path that is substantially parallel to node lines of the structure. This improves the efficiency of the separating structure. The angle must be between 5 and 10° to achieve the aforementioned effect while minimizing flow resistance.

In a further preferred embodiment according to the present invention the ultrasonic separator comprises a particle feedback channel for returning the separated particles to a supply.

By providing a particle feedback channel the particles that are captured in the node lines of the separating structure can be removed from the separator separately. For example, when the separator is applied to waste water treatment the sludge that is captured in the node lines of the separating structure is returned to the reactor. This can be achieved by periodically switching off the transducers of the separator such that the particles can be removed from the structure. Alternatively, or in combination therewith, particles that are captured in the node lines that become too large will drop out of the node lines and may settle in the separator, for example due to gravity.

The invention also relates to a system for separating particles from a liquid and/or a waste water treatment comprising an ultrasonic separator as described above.

Such system and/or waste water treatment provides the same effects and advantages as those stated with reference to the separator.

The system and/or waste water treatment comprises a second or further ultrasonic separator in one of the preferred embodiments thereof. Such further separator can be placed in series and/or parallel. When provided in parallel the overall capacity of the system is increased while the dimensions of the ultrasonic separator can be maintained to effective values. When the separators are placed in series, a further separation can be performed such that a purified water flow remains.

In a preferred embodiment according to the present invention the ultrasonic separator is provided at an angle.

By providing the ultrasonic separator at an angle the sludge that is captured in node lines will settle more easily and can be removed more effectively to the reactor in case of waste water treatment. For example, this angle is between 5 and 20° between the longitudinal direction of the liquid channel and a vertical direction. The sludge settles due to gravity, for example when the transducers are switched off. The system and/or waste water treatment are preferably provided with a controller for controlling one or more transducers. The controller sets the amplitude and/or frequency of the waves to generate the separating structure. Preferably, the controller receives information about the liquid from sensors that are located upstream and/or downstream the separating structure. These sensors may involve acoustic measurements, light scattering measurements, light reflection measurements, conductivity measurements, pH measurements, temperature measurements, impedance measurements and/or dielectric measurements, for example.

Besides the advantage that no physical membranes are required costs associated with downtime for cleaning purposes are reduced significantly as cleaning the acoustic separating structures of nodes requires switching on and off the transducers. Also, the separator according to the present invention can be implemented relatively easy on-line in an existing process. Furthermore, the liquid flow is only affected in a minimal way by the acoustic waves without substantially increasing flow resistance, for example.

In one of the preferred embodiment according to the invention the channel is provided in a reactor to enable particle concentration in the reactor.

By providing the channel of the ultrasonic separator in a reactor an effective separation can be achieved. Preferably, the reactor relates to a waste water treatment tank. The one or more channels are at least partly put in the tank such that the liquid in the channels is refreshed continuously. By providing the separating structure in the channels the activated sludge is concentrated. In fact, the separator according to the invention operates as a sludge concentration system. Preferably, the channels are provided with holes to enable entry of sufficient liquid to achieve the desired refreshment. Outside the channels the sludge concentration is relatively low. Optionally, as an alternative to the conventional use of (polishing) filters/high throughput microfiltration unit, additional separators can be provided to the other parts of the tank, preferably without holes, to enable discharge of purified waste water from the tank.

The invention further also relates to a method for separating particles from a liquid according to claim 11.

Such method provides the same effects and advantages as those stated with reference to the acoustic separator and/or the system and/or the waste water treatment. According to the method the particles are captured in the node lines of the separating structure that is achieved by interfering waves generated by one or more transducers. The transducers are configured such that the separating structure in use comprises substantially parallel channels of liquid and particles. Preferably, the particles are immobilised in the node lines. By applying the transducers and the acoustic waves the apparent diffusion coefficient for the particles increases such that the particles move to the node lines.

To minimise the forces that are applied to the particles and the liquid the liquid is preferably provided in a substantially laminar flow.

The frequency and/or amplitude of one or more generated waves are set and/or adjusted by a controller in a presently preferred embodiment according to the present invention. This increases the flexibility of the method. Preferably, the controller receives information about the liquid from one or more sensors measuring the liquid as mentioned before. Optionally, a further separator can be provided in series and/or parallel as was already mentioned.

Further advantages, features and details of the invention are elucidated on basis of preferred embodiments thereof, wherein reference is made to the accompanying drawings, wherein:
Figure 1A shows a schematic overview of an acoustic separator, not according to the invention;
Figure 1B shows a schematic overview of the separating structure;
Figure 2A shows a system using the separator of figure 1;
Figure 2B shows an alternative configuration of the transducers in the system of figure 2A;
Figure 3 shown an alternative embodiment not according to the invention; and
Figure 4 shows a schematic overview with separators placed in series.

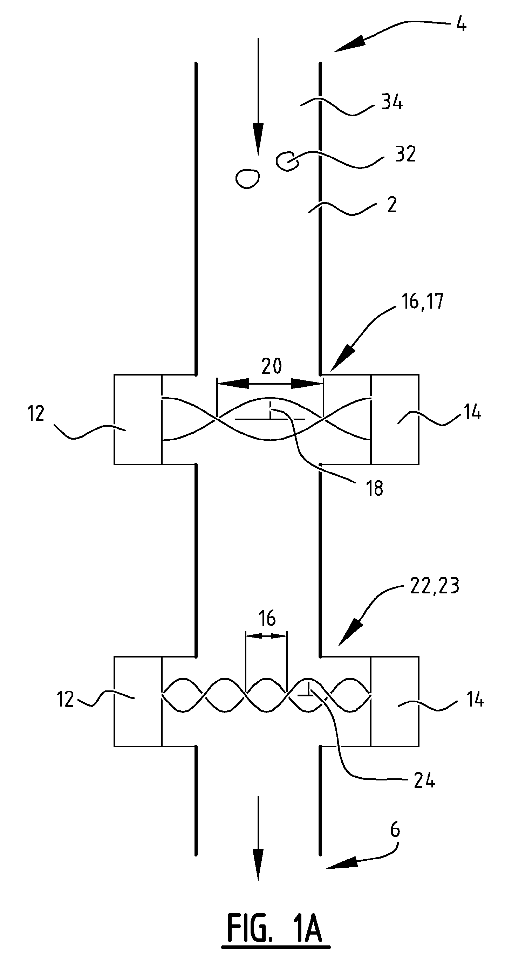

A liquid channel 2 (figure 1A) is provided with inlet 4 and outlet 6. It is noted that figure 1A is one of the many embodiments possible with the technology.

Other configurations are also possible, for example by providing additional transducers, side channels etc. In the illustrated embodiment channel 2 is a cylindrical or rectangular liquid channel. Other shapes of this first channel 2 are also possible. In fact, a large number of other geometrical shapes of the liquid channel would be feasible.

In the illustrated embodiment the optional liquid side channels 8, 10 are provided with first and second acoustic wave generating means or transducers 12, 14, respectively. In the illustrated embodiment two sets of transducers are being provided generating two separating structures in series.

Transducer 12 provides signal 16 that has the shape of a sinusoid with amplitude 18 and period 20. Transducer 14 provides signal 22, which is a similar sinusoid with amplitude 24 and period 26. Due to wave interference between the two waves/signals 16, 22, a standing wave with nodes 28 or node regions 30 is achieved. It is noted that in the illustrated embodiment transducer 14 can be replaced by a reflector. Also, additional transducers 12, 14 can be provided to enlarge the separating structure in channel 2. In a second separating structure signals 22, 23 can be provided with different amplitudes and/or frequencies.

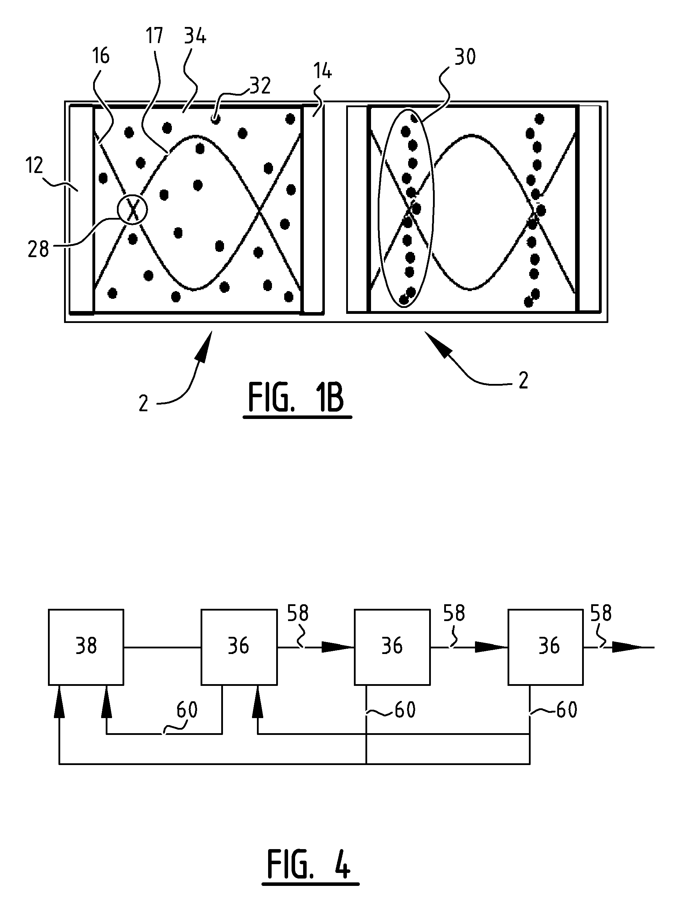

Nodes 28 (figure 1B) attract particles 32 that are present in liquid 34. In the illustrated embodiment this results in a number of node lines or node regions 30. This effectively results in a separating structure with parallel lines of particles 32 in the node lines 30 and liquid 34 thereinbetween. When applied to a waste water treatment the particles 32 are sludge particles and the liquid 34 is water.

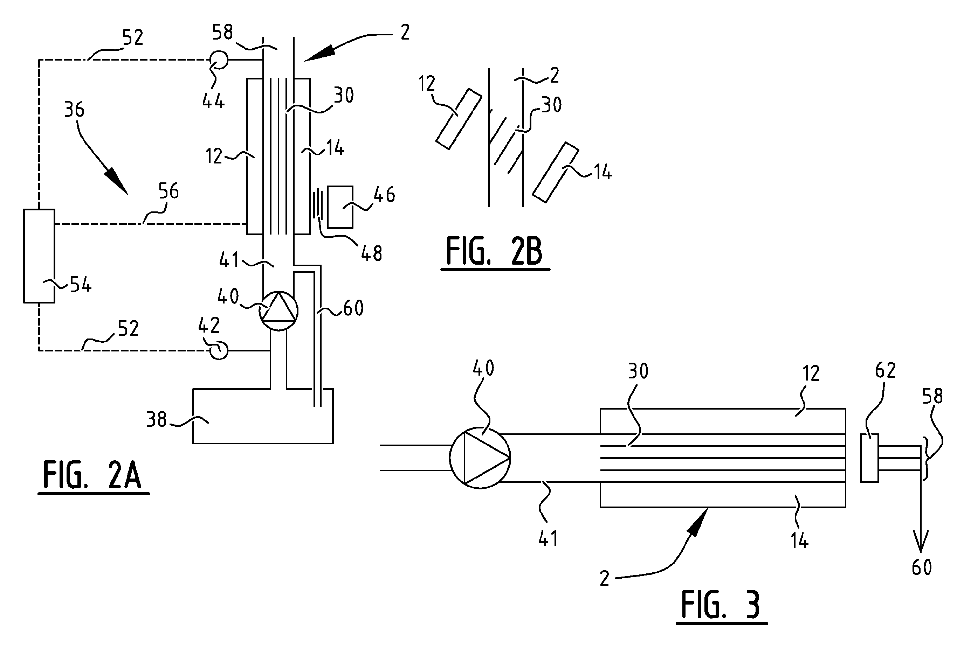

System 36 (figure 2A) comprises a waste water reactor 38, pump 40 and supply channel 41. Channel 2 is used to form the separating structure. In the illustrated embodiment sensor 42 measures one or more properties of water 34, such as temperature, amount and/or type of particles 32, dielectric constant etc. In the illustrated embodiment channel 2 is provided with two transducers 12, 14 that extend on the outer diameter of channel 2 to provide the node lines 30. At the end of channel 2 sensor 44 measures one or more properties of the liquid. Optionally, a sensor 46 provides a measurement signal 48 to measure one or more characteristics of the separating structure. Sensors 42, 44 provide measurement information 52 to controller 54. Controller 54 uses measurement information 52 to control transducers 12, 14 with control signals 56.

Sensor 42,44,46 may involve acoustic measurements, light scattering measurement, light reflection measurements, conductivity measurements, pH measurements temperature measurements, impedance measurements and/or dielectric measurements, for example. In case temperature measurements are applied, these measurements preferably comprise temperature measurement using infrared technology and/or PTC's and/or NTC's and/or Pt100 sensing elements preferably sensing elements preferably placed in fluid channel 2 and/or connected to the inner wall and/or outer wall of channel 2.

Signal 50, 52 produced by the sensors for sensing the fluid properties are fed to controller 54 such as a microprocessor, preferably to a microcontroller, preferably by the use of an analog to digital converter. Controller 54 is provided with software for controlling acoustics wave generating means 12,14. Preferably, the software contains a feedback loop from sensor 42,44 to the acoustic wave generating means 12,14 providing control signals 56 to transducers 12,14.

The liquid is provided to a system output 58. Optionally, feedback loop 60 feedback particles 34 to reactor 38.

In an alternative configuration of system 36 (figure 2B) transducers 12, 14 are provided at an angle to the vertical direction of the longitudinal direction of channel 2. In use, node lines 30 are also provided at an angle. This prevents liquid to flow through channel 2 without contacting or coming close to a node line 30.

In a further alternative embodiment for system 36 (figure 3) the liquid is supplied by pump 40 and supply 41 to channel 2. Particles 32 are captured in node lines 30. Instead of maintaining particles 34 in node lines 30 the particles are being transferred substantially along node line 30, most likely at a different speed as compared to the liquid that is transferred between the adjacent node lines 30. At output 58 an auxiliary separator 62 separates the particles 34 in output 60 and the liquid is provided to output 58. In the illustrated embodiment channel 2 is provided substantially horizontally. Alternatively, it is also possible to provide channel 2 in different configurations, for example the channel 2 can be provided with a downstream flow of liquid 34 such that due to gravity particles 32 captured in node lines 30 will move downward and can be removed from channel 2.

In a system configuration from reactor 38 liquid is provided to a first separator 36 (figure 4). In the illustrated embodiment three separators 36 are provided in series. Output 58 of a separator 36 is connected to the input of the next separator. Finally, the liquid is provided to system output 58 for further treatment. Particles that are captured in the separator 36 are provided to output 60 and returned to reactor 38 and/or one of the separators 36. This enables to separate particles step-wise from the liquid by providing specific conditions for each separator 36.

Separator 36 separates a waste water stream into a clear purified water stream and a turbid stream with a relatively high concentration of particles. These separate streams can be treated in further steps. For example the clear water stream can be treated with UV radiation. The particle stream can be treated with a relatively high ozone concentration. This minimizes the overall energy consumption required to purify both streams.

To separate particles or sludge from a liquid 32 the flow is provided to a separator 36. Transducers 12, 14 are controlled by controller 54 such that the generated waves interfere with each other thereby providing a separating structure with node lines 30. When confronted with this separating structure particles 32 start to move towards node lines 30 as the apparent diffusion coefficient is increased by the waves. The purified water stream is provided to output 58 and can be treated further. Particles 34 that are captured in node lines 30 can be collected in one of the nodes and/or node lines described before and can be treated further and/or returned to reactor 38.

Experiments performed with system 36 and applied to a waste water treatment have indicated that the sludge activity after a cycle of 14 minutes is still within the requirements for returning sludge particles 32 to reactor 38. In the experiment a flow from reactor 38 is pumped to channel 2 of system 36 that is provided with transducers 12, 14. Sludge particles 32 are separated from liquid 34 in the separating structure. After a time period of about 14 minutes transducers 12, 14 are switched off by controller 54 and the sludge particles 34 settle and eventually are returned by output 60 to reactor 38. The activity of the sludge particles 34 in output 60 was measured with the result already mentioned above. Thereafter a new cycle was started.

The present invention is by no means limited to the above described embodiments thereof. The rights sought are defined by the following claims within the scope of which many modifications can be envisaged.

## Claims

1. Method for separating particles (32) from a liquid (34), comprising:
- providing the liquid particles to a liquid channel (2) with an inlet (4) and an outlet (6);
- providing a three-dimensional separating structure comprising node lines (28, 30) with one or more sets of transducers (12, 14) or combination sets of a transducer and a reflector that produce interfering waves (16, 22), wherein the one or more sets of transducers or combination sets of a transducer and a reflector are placed at an angle to the longitudinal direction of the liquid channel, such that liquid contacts or comes close to a node line, and placing the one or more sets of transducers or combination sets of a transducer and a reflector at an angle between 5° and 10°; and
- capturing and/or attracting particles from the liquid in the node lines to separate the particles from the liquid.

2. Method according to claim 1, wherein in use the separating structure comprises substantially parallel channels of liquid and particles.

3. Method according to claim 1 or 2, wherein the particles are immobilized in the node lines and/or wherein the transducers of the sets of transducers or of the combinations of a transducer and a reflector are configured such that the apparent diffusion coefficient for the particles increases.

4. Method according to any of the foregoing claims 1-3, wherein the liquid is a sludge and/or wherein the liquid is provided to the separator in a substantially laminar flow.

5. Method according to one or more of the foregoing claims, further comprising the step of adjusting the frequency and/or amplitude (18) of one or more of the generated waves by a controller (54), wherein the controller receives information about the liquid from a sensor (42, 44) measuring the liquid.

6. Method according to the foregoing claims, further comprising the step of providing a second filter in series or parallel.

7. Method according to one or more of the foregoing claims, further comprising the step of returning the separated particles to a supply with a particle feedback channel (60).

8. Method according to any of the foregoing claims, further comprising the step of providing the liquid channel in a reactor to enable particle concentration in the reactor.

9. Method according to claim 8, wherein the liquid channel comprising holes.

10. Ultrasonic separator (36) for separating particles (32) from a liquid (34), comprising:
- a liquid channel (2) provided with an inlet (4) and an outlet (6); and
- one or more sets of transducers (12, 14) or combination sets of a transducer and a reflector being capable of producing waves that interfere with each other to generate a three-dimensional separating structure between the inlet and the outlet comprising a number of node lines (28, 30) resulting from interfering waves (16, 22) for capturing the particles, **characterized in that** the sets of transducers or combination sets of a transducer and a reflector are placed at an angle to the longitudinal direction of the liquid channel, such that liquid contacts or comes close to a node line, and wherein the angle is between 5° and 10°.

11. System for separating particles from a liquid, comprising an ultrasonic separator (36) according to claim 10.

12. System according to claim 11, further comprising a second ultrasonic separator (36) that is placed in series.

13. System according to claim 11 or 12, wherein a further ultrasonic separator (36) is placed in parallel.

14. System according to claims 11, 12 or 13, wherein the ultrasonic separator (36) is provided at an angle.

15. Waste water treatment device comprising a system with an ultrasonic separator according to one or more of the foregoing claims 11-14.

## Patentansprüche

1. Verfahren zum Abtrennen von Teilchen (32) aus einer Flüssigkeit (34),umfassend:
- Einleiten der Flüssigkeit mit den Teilchen in einen Flüssigkeitskanal (2), der einen Einlass (4) und einen Auslass (6) aufweist;
- Bereitstellen einer dreidimensionalen Trenneinrichtung umfassend Wellenknotenlinien (28, 30) mit einer oder mehreren Anordnungen von Schallwellenwandlern (12, 14) oder Kombinationen eines Schallwellenwandlers und eines Reflektors, die einander überlagernde Wellen (16, 22) erzeugen,
wobei die eine oder mehrere Anordnungen von Schallwellenwandlern oder Kombinationen eines Schallwellenwandlers und eines Reflektors unter einem Winkel zur Längsrichtung des Flüssigkeitskanals platziert sind, derart, dass die Flüssigkeit in Kontakt mit einer oder nahe an eine Wellenknotenlinie kommt, sowie Platzieren der einen oder mehreren Anordnungen von Schallwellenwandlern oder Kombinationen eines Schallwellenwandlers und eines Reflektors unter einem Winkel zwischen 5° und 10°; und
- Einfangen und/oder Anziehen von Teilchen aus der Flüssigkeit in die Wellenknotenlinien, um die Teilchen von der Flüssigkeit abzutrennen.

2. Verfahren nach Anspruch 1, worin während der Benutzung die Trenneinrichtung im Wesentlichen parallele Kanäle von Flüssigkeit und Teilchen umfasst.

3. Verfahren nach Anspruch 1 oder 2, worin die Teilchen in den Wellenknotenlinien immobilisiert werden und/oder worin die Schallwellenwandler der Anordnungen von Schallwellenwandlern oder der Kombinationen eines Schallwellenwandlers und eines Reflektors derart ausgebildet sind, dass sich der scheinbare Diffusionskoeffizient für die Teilchen erhöht.

4. Verfahren nach einem der vorhergehenden Ansprüche 1-3, worin die Flüssigkeit Klärschlamm ist und/oder worin die Flüssigkeit dem Separator in Form einer im Wesentlichen laminaren Strömung zugeführt wird.

5. Verfahren nach einem oder mehreren der vorhergehenden Ansprüche, ferner umfassend den Verfahrensschritt des Anpassens der Frequenz und/oder der Amplitude (18) einer oder mehrerer der erzeugten Wellen mittels eines Reglers (54), wobei der Regler von einem die Flüssigkeit vermessenden Sensor (42, 44) Informationen über die Flüssigkeit empfängt.

6. Verfahren nach den vorhergehenden Ansprüchen, ferner umfassend den Verfahrensschritt des Bereitstellens eines zweiten Filters in Hintereinanderschaltung oder Parallelschaltung.

7. Verfahren nach einem oder mehreren der vorhergehenden Ansprüche, ferner umfassend den Verfahrensschritt des Zurückführens der abgetrennten Teilchen zu einer Rückführvorrichtung mit einem Rückführkanal (60) für die Teilchen.

8. Verfahren nach einem der vorhergehenden Ansprüche, ferner umfassend den Verfahrensschritt des Anordnens des Flüssigkeitskanals in einem Reaktor, um das Ankonzentrieren der Teilchen im Reaktor zu bewirken.

9. Verfahren nach Anspruch 8, worin der Flüssigkeitskanal Öffnungen aufweist.

10. Ultraschallseparator (36) zum Abtrennen von Teilchen (32) aus einer Flüssigkeit (34), umfassend:
- einen Flüssigkeitskanal (2) mit einem Einlass (4) und einem Auslass (6), und
- eine oder mehreren Anordnungen von Schallwellenwandlern (12, 14) oder Kombinationen eines Schallwellenwandlers und eines Reflektors zum Erzeugen von einander überlagernden Schallwellen, die zwischen dem Einlass und dem Auslass eine dreidimensionale Trenneinrichtung bilden, welche zum Einfangen der Teilchen eine Anzahl von Wellenknotenlinien (28, 30) umfasst, die aus den sich überlagernden Wellen (16, 22) resultieren,
**dadurch gekennzeichnet, dass** die Anordnungen von Schallwellenwandlern oder Kombinationen eines Schallwellenwandlers und eines Reflektors unter einem Winkel zur Längsrichtung des Flüssigkeitskanals platziert sind, derart, dass die Flüssigkeit in Kontakt mit einer oder nahe an eine Wellenknotenlinie kommt, und wobei der Winkel zwischen 5° und 10° beträgt.

11. System zum Abtrennen von Teilchen aus einer Flüssigkeit, umfassend einen Ultraschallseparator nach Anspruch 10.

12. System nach Anspruch 11, ferner umfassend einen in Serie geschalteten zweiten Ultraschallseparator (36).

13. System nach Anspruch 11 oder 12, worin ein weiterer Ultraschallseparator (36) parallel geschaltet angeordnet ist.

14. System nach einem der Ansprüche 11, 12 oder 13, worin der Ultraschallseparator (36) unter einem Winkel angeordnet ist.

15. Vorrichtung zur Behandlung von Abwasser, umfassend ein System mit einem Ultraschallseparator nach einem oder mehreren der vorhergehenden Ansprüche 11 bis 14.

## Revendications

1. Procédé de séparation de particules (32) à partir d'un liquide (34), comprenant :
- la fourniture des particules dans un liquide dans un canal de liquide (2) comportant une entrée (4) et une sortie (6) ;
- la fourniture d'une structure de séparation tridimensionnelle comprenant des lignes de noeud (28, 30) avec un ou plusieurs ensembles de transducteurs (12, 14) ou ensembles de combinaison d'un transducteur et d'un réflecteur qui produisent des ondes interférentes (16, 22), les un ou plusieurs ensembles de transducteurs ou ensembles de combinaison d'un transducteur et d'un réflecteur sont placés à un angle par rapport à la direction longitudinale du canal de liquide, de sorte que le liquide entre en contact ou vienne à proximité d'une ligne de noeud, et le placement des un ou plusieurs ensembles de transducteurs ou ensembles de combinaison d'un transducteur et d'un réflecteur à un angle compris entre 5° et 10° ; et
- la capture et/ou l'attraction de particules depuis le liquide dans les lignes de noeud pour séparer les particules du liquide.

2. Procédé selon la revendication 1, dans lequel, en utilisation, la structure de séparation comprend des canaux sensiblement parallèles de liquide et de particules.

3. Procédé selon la revendication 1 ou 2, dans lequel les particules sont immobilisées dans les lignes de noeud et/ou dans lequel les transducteurs des ensembles de transducteurs ou des combinaisons d'un transducteur et d'un réflecteur sont configurés de sorte que le coefficient de diffusion apparent pour les particules augmente.

4. Procédé selon l'une quelconque des revendications précédentes 1 à 3, dans lequel le liquide est une boue et/ou dans lequel le liquide est fourni au séparateur dans un flux sensiblement laminaire.

5. Procédé selon une ou plusieurs des revendications précédentes, comprenant en outre l'étape d'ajustement de la fréquence et/ou amplitude (18) d'une ou plusieurs des ondes générées par un dispositif de commande (54), dans lequel le dispositif de commande reçoit des informations relatives au liquide depuis un capteur (42, 44) mesurant le liquide.

6. Procédé selon les revendications précédentes, comprenant en outre l'étape de fourniture d'un deuxième filtre en série ou en parallèle.

7. Procédé selon une ou plusieurs des revendications précédentes, comprenant en outre l'étape de retour des particules séparées vers une alimentation avec un canal de retour de particules (60).

8. Procédé selon l'une quelconque des revendications précédentes, comprenant en outre l'étape de fourniture du canal de liquide dans un réacteur pour permettre la concentration de particules dans le réacteur.

9. Procédé selon la revendication 8, dans lequel le canal de liquide comprend des trous.

10. Séparateur ultrasonore (36) pour séparer des particules (32) d'un liquide (34), comprenant :
- un canal de liquide (2) pourvu d'une entrée (4) et d'une sortie (6) ; et
- un ou plusieurs ensembles de transducteurs (12, 14) ou ensembles de combinaison d'un transducteur et d'un réflecteur étant capable de produire des ondes qui interfèrent mutuellement pour générer une structure de séparation tridimensionnelle entre l'entrée et la sortie comprenant une pluralité de lignes de noeud (28, 30) résultant des ondes interférantes (16, 22) pour capturer les particules, **caractérisé en ce que** les ensembles de transducteurs ou ensembles de combinaison d'un transducteur et d'un réflecteur sont placés à un angle par rapport à la direction longitudinale du canal de liquide, de sorte que le liquide entre en contact ou vienne à proximité d'une ligne de noeud, et dans lequel l'angle est compris entre 5° et 10°.

11. Système de séparation de particules à partir d'un liquide, comprenant un séparateur ultrasonore (36) selon la revendication 10.

12. Système selon la revendication 11, comprenant en outre un deuxième séparateur ultrasonore (36) qui est placé en série.

13. Système selon la revendication 11 ou 12, dans lequel un séparateur ultrasonore supplémentaire (36) est placé en parallèle.

14. System selon les revendications 11, 12 ou 13, dans lequel le séparateur ultrasonore (36) est disposé à un angle.

15. Dispositif de traitement des eaux usées comprenant un système avec un séparateur ultrasonore selon une ou plusieurs des revendications précédentes 11 à 14.
